# EUROPEAN PATENT APPLICATION

(11) **EP 1 347 276 A2**
(43) Date of publication of application: **24.09.2003**
(21) Application number: 03425152.0
(22) Date of filing: 13.03.2003
(51) Int. Cl.: G01G 19/393

(54) **Product handling unit and method, in particular for plant produce**

(30) Priority: 22.03.2002 IT BO20020150
(71) Applicant: Packing Systems S.r.l., 41013 Castelfranco Emilia (Modena) (IT)
(72) Inventor: Canovi, Graziella, 41010 Gaggio di Piano (IT)
(74) Representative: Lanzoni, Luciano

(57) **Abstract**

The unit for handling products (2), in particular plant produce, to be fed to a packaging station comprises a station (11) for dividing the products (2), which are bulk fed to the station (11) by an elevator (5), into groups (12); a station (13) where the product groups (12) are accumulated and weighed; two lines (18, 19) for transferring the groups (12) of discharged products from the accumulation and weighing station (13) to the packaging station, each transfer line (18, 19) comprising, in succession, a first conveyor (20) that moves continuously and a second conveyor (21) that moves intermittently, to feed a batch of the products (2) of defined weight to the packaging station.

## Description

The present invention relates to a product handling unit.

More specifically, and without restricting the scope of the inventive concept, the invention relates to a unit for dividing bulk fed fruit and vegetable products, such as, for example, potatoes, citrus fruit, and nuts, into batches of predetermined size.

Units for weighing and dividing fruit and vegetable products into batches to be fed to one or more packaging stations downstream are well known in prior art.

The products are bulk fed to these units at a feed buffer station and from there are transferred to a weighing station. From the weighing station, groups of products of measured weight are fed into a plurality of hoppers. The groups of products, each having a different weight, are combined by a processing unit that computes an appropriate combination of them to form a batch of predetermined, programmed weight to be conveyed to the packaging station.

This type of system, known as combination weighing, is used to divide products of variable weight into batches of nearly equal weight to obtain masses that are as close as possible to a predetermined nominal weight.

It is achieved by weighing a suitable number of product groups in a corresponding number of compartments equipped with sensors designed to measure their weight.

With the data relating to the weights of all the product groups, the processing unit computes the set of groups which, if combined in a single batch, gives a total weight that is as close as possible to the predetermined weight. The hoppers containing the groups belonging to the computed set are then opened and their loads discharged to form the required batch.

To obtain values that depart as little as possible from the nominal weight, the population of the groups to be weighed must be very large and, consequently, the weighing machines must have a large number of hoppers. Thus, for operations to be economically worthwhile, the hoppers must discharge their loads at considerably high speeds.

Prior art units discharge the different hopper loads onto a conveyor belt that feeds the products forming the single batch to the packaging station.

Since there must be a large number of hoppers, as mentioned above, the part of the conveyor belt that collects the products from the hoppers must be long enough to receive the products discharged from all the hoppers. Further, to avoid mixing the products belonging to two successive batches and since the batches fed to the packaging station downstream must be suitably spaced, the conveyor belt must be driven discontinuously so that a suitable interval of time elapses between the moment one batch of products is fed and the moment the next one is fed.

In computing the combination that adds up to the required weight, the processing unit may select the loads from any of the hoppers in the set and, in the worst of cases, for example, the conveyor belt might have to collect the products from the first hopper and those from the last hopper in the set, which means that the batch of required weight may take a considerable length of time to be transferred to the packaging station. This may constitute a considerable disadvantage.

The aim of the present invention is to overcome the above mentioned disadvantage through a product handling unit that is practical, functional and enables rapid transfer of product batches.

Accordingly, the invention provides a unit for handling products, in particular plant produce, to be fed to a packaging station, comprising: a station for dividing the bulk fed products into groups; a station where the product groups are accumulated and weighed; a line for transferring the groups of discharged products from the accumulation and weighing station to the packaging station, the unit being characterised in that the transfer line comprises, in succession, a first continuous conveyor for receiving a first set of product groups, and a second intermittent conveyor for receiving a second set of product groups as well as the products from the first conveyor, the first and second sets of product groups together constituting a product batch of defined weight which is then fed by the second conveyor to the packaging station.

The present invention also relates to a product handling method, in particular for plant produce.

The present invention accordingly provides a method for handling products, in particular plant produce, to be fed to a packaging station, comprising the steps of dividing the products fed in bulk into a plurality of separate groups, weighing the product groups separately and feeding them along the transfer line to the packaging station, the method being characterised in that the feeding step comprises the further steps of: continuously feeding a first defined set of weighed product groups along a first stretch of the transfer line; intermittently feeding a second defined set of weighed product groups along a second stretch of the transfer line, merging the first and second defined sets of product groups on the second stretch of the transfer line to form a product batch of defined weight, feeding the batch to the packaging station.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic side elevation view of a preferred embodiment of the product handling unit according to the present invention;
- Figure 2 is a front elevation view of a detail of the unit of Figure 1;
- Figures 3 and 4 are perspective detail views, with some parts cut away, of two parts of the unit of Figure 1;
- Figure 5 is a schematic top view showing a part of the unit illustrated in the other figures;
- Figure 6 is a schematic side detail view, with some parts cut away and others in cross section, showing a part of the unit illustrated in the other figures.

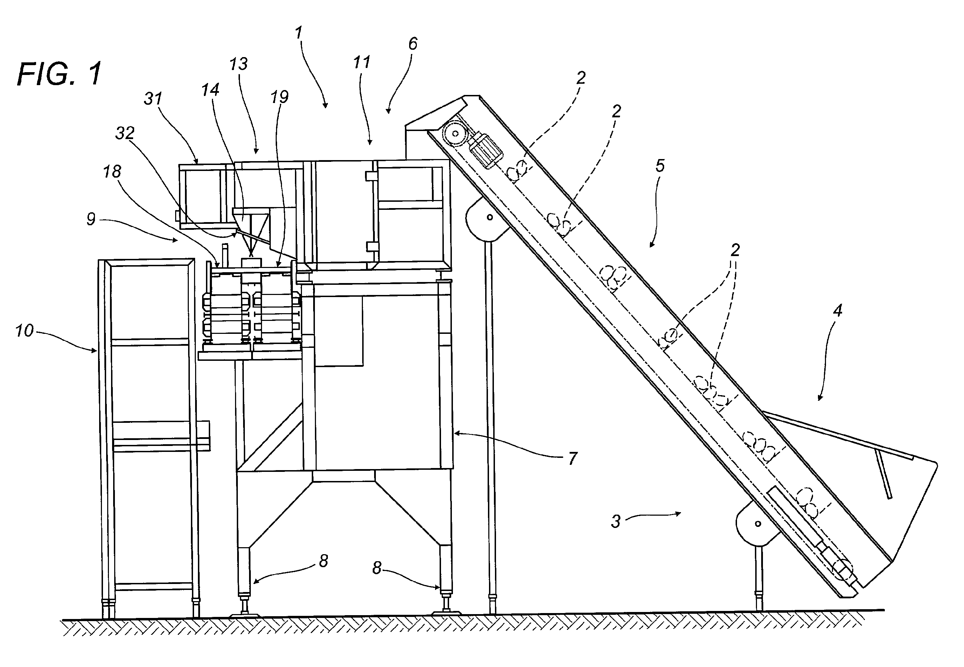

With reference to Figure 1, the numeral 1 denotes in its entirety a unit for handling fruit and vegetable products 2 according to the present invention.

At an upper section 3 of it, the unit 1 comprises a product 2 loading zone 4 and a customary elevator belt 5 designed to scoop up the products 2 from the loading zone 4 and to feed them to an upper section 6 of the unit 1. The upper section 6 is supported by a mounting frame 7 that rests on the floor on a plurality of adjustable feet 8.

At the front outside end 9 of the unit 1 there is a structure 10, equipped with a platform, used to inspect the parts at the top of the unit.

At the upper section 6 of it, the unit 1 comprises a station 11 for dividing the bulk fed products 2 into groups 12 and a station 13 where the groups 12 of products 2 are accumulated and weighed.

The dividing station 11 is of well known type and therefore not illustrated in detail or further described.

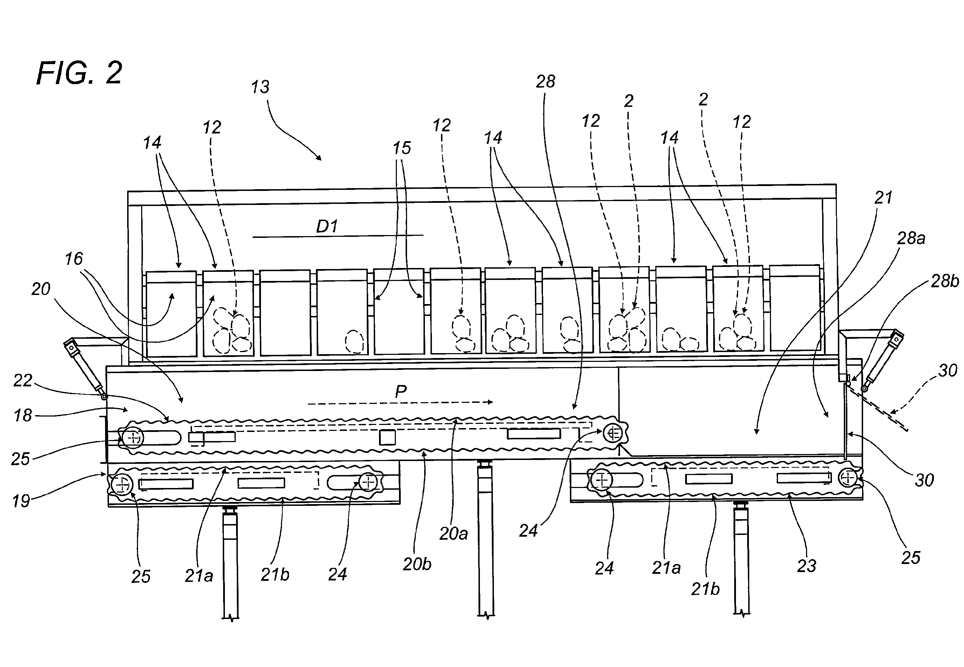

As illustrated in Figures 2, 3 and 4, the accumulation and weighing station 13 comprises a plurality of hoppers 14 in which the weighed groups 12 of products 2 accumulate. The hoppers 14, which are wedge shaped, are mounted side by side in a horizontal direction D1. Each hopper 14 has two parallel sides 15 and two mobile walls 16, 17, respectively front and rear, hinged to a fixed portion 14a so that the hopper 14 itself can be opened to discharge the group 12 of products 2 it contains. When the hoppers 14 are closed, the walls 16, 17, with their right-angled corner portions, define the sides 15 of the hoppers 14.

Under the accumulation and weighing station 13, the unit 1 comprises two transfer lines 18, 19, respectively front and rear line, onto which the products 2 are discharged by the hoppers 14.

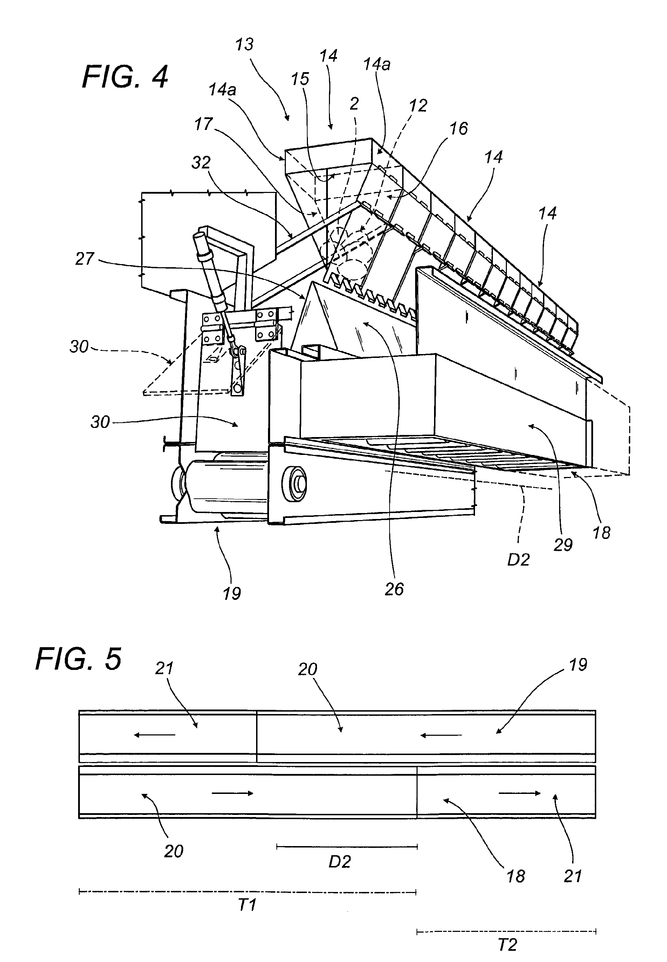

As illustrated in more detail in Figure 5, the two transfer lines 18, 19 extend in a direction D2 parallel to the direction D1 and each comprise a first conveyor belt 20 and a second conveyor belt 21, positioned one after the other.

The first conveyor belt 20 is a continuous conveyor, meaning that the conveyor 20, during a normal operating cycle of the unit 1, is driven so that it moves uninterruptedly.

The second conveyor belt 21 is an intermittent conveyor, meaning that the conveyor 21, during a normal operating cycle of the unit 1, is driven so that it stops and starts at given intervals.

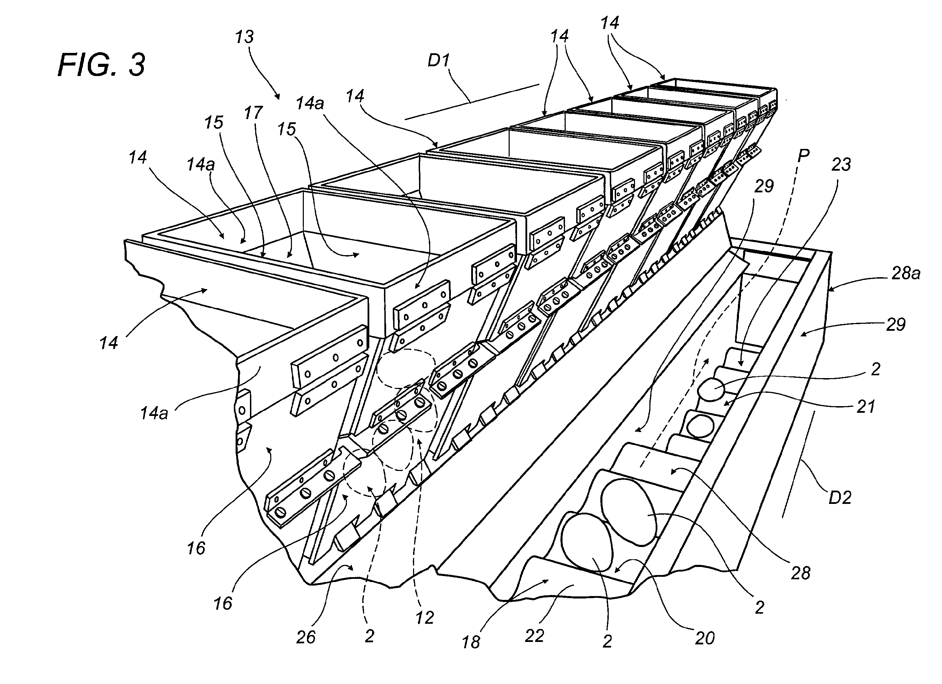

With reference in particular to Figures 2 and 3, the conveyors 20 and 21 both comprise respective endless belts 22, 23 looped around rollers 24, 25, one of which, the roller 24, is power driven, and the other, the roller 25, is free turning.

Each conveyor 20, 21 has an upper active section 20a, 21a and a lower return section 20b, 21b. The two active sections 20a, 21a lie in horizontal planes which are offset from each other in such a way that the active section 20a of the first conveyor 20 is positioned at a level above the active section 21a of the second conveyor 21.

The conveyors 20, 21 are driven by customary electric motors which are not illustrated in the accompanying drawings.

With reference to Figure 5, the first continuous conveyor 20 defines a first stretch T1 of the transfer line and the second intermittent conveyor defines a second stretch T2 of the transfer line.

Interposed between the hoppers 14 and the conveyors 20, 21 of each line transfer line 18, 19, the unit 1 comprises two inclined walls 26 and 27, respectively front and rear, designed to guide the products falling out of the hoppers 14 onto the belts 22, 23.

Preferably, the belts 22, 23 are of the undulated type to facilitate flowing of the products 2 on them.

The conveyors 20, 21 of each transfer line 18, 19 are housed in a product guide channel 28 defined, at the sides, by two vertical walls 29 and, below, by the belts 22, 23 of the conveyors 20, 21 themselves.

The products 2 are transported along a feed path P inside the channel 28.

The channel 28 has a product 2 discharge end 28a leading to a customary packaging station which is not illustrated, the discharge end 28a being equipped with a flap 30 that closes the channel 28. As shown in Figures 2 and 4, the flap 30 is hinged to a portion 28b of the channel 28 and can move between a closed first configuration where it is substantially vertical and stops the products 2 inside the channel 28, and an open second configuration, represented by the dashed line in the two figures, that allows the products 2 to feed out of the channel 28.

The set of groups 12 of products 2 feeding out of the channel 28 towards the packaging station defines a complete batch of products 2. In other words, the batch constitutes the contents of the end package of the products 2.

The unit 1 for handling the products 2 comprises a central processing unit 31 that controls the unit 1 in accordance with predetermined parameters, such as the required weight of the end batch, and in accordance with parameters detected during operation, such as the weight of the groups 12 inside the different hoppers or the ready state of the packaging station downstream of the unit 1.

During use, the products 2 are scooped up from the loading zone 4 by the elevator belt 5 and fed in bulk to the station 11 where they are divided into groups 12 which are then transferred by customary devices that are well within the knowledge of an expert in the trade and therefore not illustrated, to the aforementioned accumulation and weighing station 13.

At the accumulation and weighing station 13, each group 12 is weighed and placed in one of the hoppers 14.

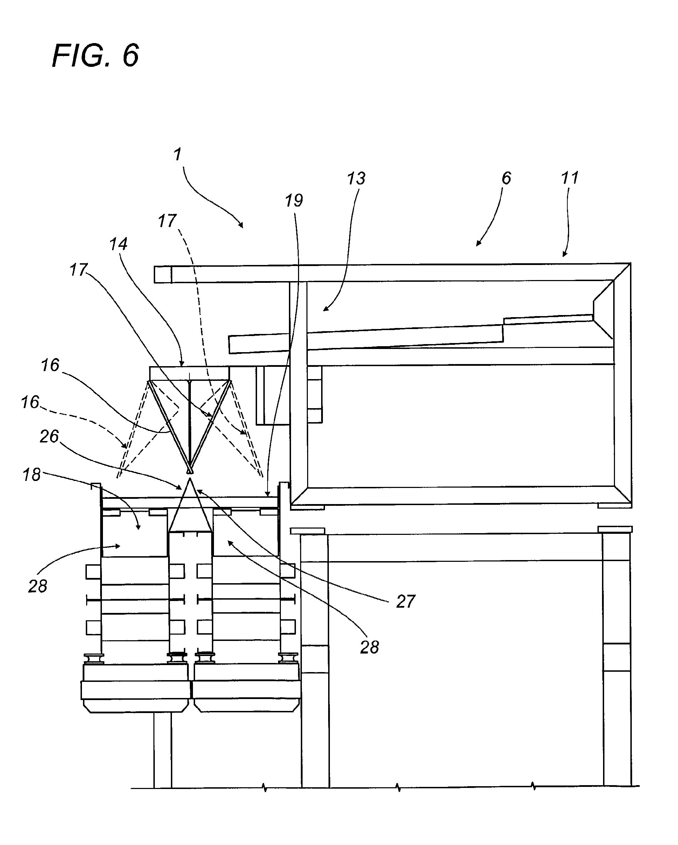

As illustrated in Figures 4 and 6, the group 12 located in one of the hoppers 14 may be discharged onto either of the transfer lines 18, 19 by simply opening one or the other of the two mobile walls 16, 17.

The mobile walls 16, 17 of the hopper 14 are opened and closed by customary actuators that are not illustrated in the drawings. Figure 4 shows, purely by way of example, an arm 32 connecting the front mobile wall 16 of a hopper 14 to the above mentioned actuating means that are not illustrated. The open configurations of the mobile walls 16, 17 of the hopper 14 are shown by the dashed lines in Figure 6.

With reference to Figure 2, a first set N1, of hoppers 14 faces, and discharges the groups 12 of products 2 onto, the first conveyor 20, while a second set N2, of hoppers 14 faces, and discharges the groups 12 of products 2 onto, the second conveyor 21.

During a normal operating cycle of the unit 1, groups 12 discharged from the first set N1 of hoppers 14 are fed by the continuously moving conveyor 20 towards the second conveyor 21, which is substantially stationary; and the second set N2 of hoppers discharges its groups 12 of products 2 onto the second conveyor 21; the combination of the groups 12 of products 2 discharged from the two sets of hoppers constitutes a batch of defined weight programmed in the central processing unit 31.

The flap 30 is opened and, at practically the same time, the second conveyor 21 starts moving for a first time period t1 to feed the product batch out of the channel 28 towards the packaging station (not illustrated).

During the intermittent motion of the second conveyor 21, the hoppers 14 facing the first continuous conveyor 20 can, starting from the ones furthest away from the end 28a of the channel 28, begin discharging the groups 12 of products onto the belt 22 of the first conveyor 20.

Thus, the step of discharging the groups 12 onto the first conveyor 20 is at least partly simultaneous with the step of feeding the batch out of the channel 28, with obvious advantages in terms of time saved.

The processing unit 31 opens the hoppers 14 in a suitable sequence computed according to the weight of the group 12 contained in each hopper 14 and according to the position of each hopper 14 along its transfer line 18, 19.

Since the products 2 are variable in weight, the weights of the groups 12 which they form will normally also vary. The central processing unit 31 analyses the weights of all the groups 12 instantaneously available inside the hoppers 14 and selects those whose individual weights add up, with obvious margins of tolerance, to the total predetermined weight for the package to be made from the batch being formed.

Once the hoppers 14 to be discharged to form the batch have been selected, the central processing unit 31 opens them in the aforementioned sequence in such a way that the formation of one batch starts or can start while the previous batch is in the process of being fed out of the channel 28.

The hoppers 14 discharge the groups 12 of products 2, which combine to form the batch of predetermined weight, in the aforementioned sequence over a total time period t2. The time period t2 taken by the hoppers 14 to discharge the weighed product groups 12 onto the transfer line 18, 19 is therefore greater than the time period t1 taken by the second intermittent conveyor 21 to feed out a batch.

It will be understood that the invention can be subject to modifications and variations without thereby departing from the scope of the inventive concept. Moreover, all the details of the invention may be substituted by technically equivalent elements.

## Claims

1. A unit for handling products (2), in particular plant produce, to be fed to a packaging station, comprising:
- a station (11) for dividing the products, which are bulk fed to the station (11), into groups (12);
- a station (13) where the product groups (12) are accumulated and weighed;
- a line (18, 19) for transferring the discharged groups (12) from the accumulation and weighing station (13) to the packaging station, the unit being **characterised in that** the transfer line (18, 19) comprises, in succession,
- a first continuous conveyor (20) for receiving a first set (N1) of product groups (12),
- a second intermittent conveyor (21) for receiving a second set (N2) of product groups (12) as well as the product groups (12) from the first conveyor (20), the first and second sets (N1, N2) of product groups (12) together constituting a batch of products (2) of defined weight,
- this batch being fed to the packaging station by the second conveyor (21).

2. The unit according to claim 1, **characterised in that** the accumulation and weighing station (13) comprises a plurality of containers (14) for the temporary accumulation of the groups (12) of products (2), and also **characterised in that** it comprises a central processing unit (31) that opens the containers (14) in a defined sequence, so as to discharge the weighed groups (12) of products (2) onto the first and second conveyors (20, 21).

3. The unit according to claim 2, **characterised in that** the processing unit (31) opens the containers (14) in a suitable sequence computed according to the weight of the group (12) of products (2) contained in each container (14) and according to the position of each container (14) along the first and second conveyors (20, 21).

4. The unit according to any of the foregoing claims from 1 to 3, **characterised in that** it comprises an element (30) for closing the transfer line (18, 19), the closing element (30) being mobile between an open first configuration where the second intermittent conveyor (21) is driven forward by the central processing unit (31) for a first time period (t1) so as to feed the products (2) to the packaging station, and a closed second configuration where the second intermittent conveyor (21) is substantially stationary.

5. The unit according to claim 4, **characterised in that** the time period (t2) taken by the containers (14) to discharge onto the transfer line (18, 19) the weighed product groups (12), which combine to form the batch of predetermined weight, is greater than, and partly overlaps, the time period (t1).

6. The unit according to any of the foregoing claims from 1 to 5, where the containers (14) for the groups (12) of products (2) are mounted side by side in a defined direction (D1), **characterised in that** the transfer line (18, 19) comprising the first and second conveyors (20, 21) forms a path (P) along which the products (2) are fed and which is at least partly parallel to the defined direction (D1).

7. The unit according to any of the foregoing claims from 1 to 6, **characterised in that** the first continuous conveyor (20) constitutes a first stretch (T1) of the transfer line (18, 19) and the second intermittent conveyor (21) constitutes a second stretch (T2) of the transfer line (18, 19), the first and second stretches (T1, T2) lying in planes which are offset from each other.

8. The unit according to any of the foregoing claims from 1 to 7, **characterised in that** it comprises two transfer lines (18, 19) to feed the groups (12) of products (2) combined in batches to two respective packaging stations.

9. The unit according to claim 8, **characterised in that** each of the two transfer lines (18, 19) comprises a first continuous conveyor (20) and a second intermittent conveyor (21).

10. A method for handling products (2), in particular plant produce, to be fed to a packaging station, comprising the steps of:
- dividing the bulk fed products (2) into a plurality of separate groups (12);
- weighing the groups (12) of products (2) separately and feeding them along a transfer line (18, 19) to the packaging station, the method being **characterised in that** the feeding step comprises the further steps of:
- continuously feeding a first defined set (N1) of weighed groups (12) of products (2) along a first stretch (T1) of the transfer line (18, 19);
- intermittently feeding a second defined set (N2) of weighed groups (12) of products (2) along a second stretch (T2) of the transfer line (18, 19);
- merging the first and second defined sets (N1, N2) of product groups (12) on the second stretch (T2) of the transfer line (18, 19) to form a product batch of defined weight;
- feeding the batch to the packaging station.

11. The method according to claim 10, **characterised in that** the feeding step comprises the further steps of:
- temporarily accumulating each group (12) of products (2) in one of a plurality of containers (14);
- discharging the weighed groups (12) of products (2) onto the transfer line (18, 19) in a defined time sequence.

12. The method according to claim 11, **characterised in that** the step of discharging the weighed groups (12) of products (2) onto the transfer line (18, 19) comprises the sub-steps of:
- discharging the first defined set (N1) of groups (12) onto a first conveyor (20) constituting the first stretch (T1) of the transfer line (18, 19);
- discharging the second defined set (N2) of groups (12) onto a second conveyor (21) constituting the second stretch (T2) of the transfer line (18, 19).

13. The method according to claim 12, **characterised in that** the step of discharging the first defined set (N1) of weighed groups (12) of products (2) of a given batch onto the first continuous conveyor (20) occurs at least partly during the step of feeding the previously formed batch to the packaging station.
